(19) Europäisches Patentamt
European Patent Office
Office européen des brevets

(11) EP 2 904 340 B1

(12) EUROPEAN PATENT SPECIFICATION

(45) Date of publication and mention of the grant of the patent:
**21.11.2018 Bulletin 2018/47**

(21) Application number: **13843859.3**

(22) Date of filing: **30.09.2013**

(51) Int Cl.:
***F27B 5/00*** *(2006.01)* ***A21B 1/00*** *(2006.01)*
***A21B 2/00*** *(2006.01)* ***H05B 3/34*** *(2006.01)*
***H05B 3/42*** *(2006.01)* ***H05B 3/02*** *(2006.01)*
***A21B 1/22*** *(2006.01)* ***A21B 1/48*** *(2006.01)*
***H05B 3/00*** *(2006.01)* ***H05B 3/56*** *(2006.01)*

(86) International application number:
**PCT/US2013/062767**

(87) International publication number:
**WO 2014/055457 (10.04.2014 Gazette 2014/15)**

# (54) HIGH-SPEED OVEN INCLUDING WIRE MESH HEATING ELEMENTS AND A BELT

HOCHGESCHWINDIGKEITSOFEN MIT DRAHTGITTER-HEIZELEMENTEN UND TRANSPORTBAND

FOUR À GRANDE VITESSE COMPRENANT DES ÉLÉMENTS CHAUFFANTS À TREILLIS DE FIL ET CONVOYEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2012 US 201261708599 P**
**01.10.2012 US 201261708602 P**

(43) Date of publication of application:
**12.08.2015 Bulletin 2015/33**

(73) Proprietor: **De Luca Oven Technologies, LLC**
**San Francisco, California 94111 (US)**

(72) Inventor: **DE LUCA, Nicholas P.**
**Carmel-by-the-Sea, California 93921 (US)**

(74) Representative: **Dehns**
**St. Brides House**
**10 Salisbury Square**
**London EC4Y 8JD (GB)**

(56) References cited:
**EP-A2- 0 395 306** **WO-A1-2013/166519**
**WO-A1-2013/166519** **WO-A2-00/40912**
**US-A- 5 239 917** **US-A- 5 239 917**
**US-A1- 2003 121 904** **US-A1- 2010 166 397**
**US-A1- 2010 166 397** **US-A1- 2010 166 397**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 904 340 B1

## Description

## BACKGROUND

A method for heating involves the use of Nichrome wire. Nichrome wire is commonly used in appliances such as hair dryers and toasters as well as used in embedded ceramic heaters. The wire has a high tensile strength and can easily operate at temperatures as high as 1250 degrees Celsius. Nichrome has the following physical properties (Standard ambient temperature and pressure used unless otherwise noted):

| Material property | Value | Units |
|---|---|---|
| Tensile Strength | $2.8 \times 10^{8}$ | Pa |
| Modulus of elasticity | $2.2 \times 10^{11}$ | Pa |
| Specific gravity | 8.4 | None |
| Density | 8400 | $kg/m^3$ |
| Melting point | 1400 | °C. |
| Electrical resistivity at room temperature | $1.08 \times 10^{-6}$[1] | Ω • m |
| Specific heat | 450 | J/kg° C. |
| Thermal conductivity | 11.3 | W/m/° C. |
| Thermal expansion | $14 \times 10^{-6}$ | m/m/° C. |

## SUMMARY OF THE INVENTION

Exemplary embodiments of the present invention disclose a radiant oven comprising: a cooking cavity configured to receive a cooking load; a circuit configured to provide current supplied by one or more stored energy devices; and a main heater comprising a multiple of wire mesh heating elements to be driven by the current, the multiple wire mesh heating elements being sized and positioned to heat the cooking load, and a gap between each of the multiple wire mesh heating elements, characterised in that the radiant oven further comprises a movable belt configured to support the cooking load as the cooking load is moved through the cooking cavity, wherein the gap between each of the multiple wire mesh heating elements substitutes for an off-cycle of the radiant oven, and in that the radiant oven is configured so that each of the multiple wire mesh heating elements is individually controlled for duration.

Exemplary embodiments of the present invention disclose a heating method including: locating a cooking load into a heating cavity including multiple wire mesh heaters; and discharging current from a stored energy source through the one or more wire mesh heaters.

It is to be understood that both the foregoing general description and the following detailed description are exemplary and explanatory and are intended to provide further explanation of the invention as claimed. US 2010/166397 discloses the best prior art, namely a radiant oven comprising one or more wire mesh heating elements driven by a current that are positioned for heating and cooking food. WO00/40912 A2 discloses the cycled operation of a radiant heater oven.

## BRIEF DESCRIPTION OF THE FIGURES

The accompanying drawings, which are included to provide a further understanding of the invention and are incorporated in and constitute a part of this specification, illustrate embodiments of the invention, and together with the description serve to explain the principles of the invention.

FIG. 1 is a graph illustrating the radiative area of a mesh element as a function of the center to center spacing of the mesh strands.

FIG. 2 is a graph illustrating the electrical resistance of a mesh element as a function of the radius of the strand and the mesh spacing.

FIG. 3 is a graph illustrating the ramp up time of a two sided 125 mm x 250 mm mesh element oven as a function of the radius of the strand and the mesh spacing and power drain of 20 KW.

FIG. 4 is a composite graph of FIGS. 1 and 2, indicating the regions applicable for high speed oven cooking with a De Luca Element Ratio close to 0.11 ohms/m2.

FIG. 5 illustrates a 24V oven comprising a mesh system.

FIG. 6 is an isometric view of the high speed oven including a conveyor belt and multiple wire mesh heating elements.

FIG. 7 is an isometric view of a 4-stack of high speed oven.

FIG. 8 is an isometric view of a 4-stack of high speed oven without a covering.

FIG. 9 is a table of energies consumed by various mesh wire segments of a high speed stored energy.

## DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention, as defined by the claims, to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

The terminology used herein is for describing particular embodiments only and is not intended to be limiting of the present disclosure. As used herein, the singular forms "a," "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first," "second," and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

Hereinafter, exemplary embodiments of a radiant oven and a method of heating using multiple wire-mesh elements will be described in more detail with reference to the accompanying drawings.

When considering the use of Nichrome within an oven it is important to consider not only the resistive characteristics but also the black body emission of the element when hot.

With Regard to the General Characterization of Resistive Elements, the resistance is proportional to the length and resistivity, and inversely proportional to the area of the conductor.

$$R = L / A \bullet \rho = L / A \bullet \rho_0(\alpha(T - T_0) + 1) \qquad \text{Eq.1}$$

where $\rho$ is the resistivity:

$$\rho = 1 / \sigma.,$$

L is the length of the conductor, A is its cross-sectional area, T is its temperature, TO is a reference temperature (usually room temperature), $\rho$0 is the resistivity at T0, and $\alpha$ is the change in resistivity per unit of temperature as a percentage of pO. In the above expression, it is assumed that L and A remain unchanged within the temperature range. Also note that $\rho$0 and $\alpha$ are constants that depend on the conductor being considered. For Nichrome, $\rho$0 is the resistivity at 20 degrees C. or 1.10×10-6 and $\alpha$=0.0004. From above, the increase in radius of a resistive element by a factor of two will decrease the resistance by a factor of four; the converse is also true.

Regarding the power dissipated from a resistive element, where, I is the current and R is the resistance in ohms, v is the voltage across the element, from Ohm's law it can be seen that, since v=iR,

$$P=i^2R$$

In the case of an element with a constant voltage electrical source, such as a battery, the current passing through the element is a function of its resistance. Replacing R from above, and using ohms law,

$$P=v^2 / R=v^2A / \rho_0L \qquad \text{Eq. 2}$$

In the case of a resistive element such as a nichrome wire the heat generated within the element quickly dissipates as radiation cooling the entire element.

Now, Considering the Blackbody Characterization of the Element: Assuming the element behaves as a blackbody, the Stefan-Boltzmann equation characterizes the power dissipated as radiation:

$$W=\sigma \bullet A \bullet T^4 \qquad \text{Eq. 3}$$

Further, the wavelength $\lambda$, for which the emission intensity is highest, is given by Wien's Law as:

$$\lambda_{max} = b / T \qquad \text{Eq. 4}$$

Where,

$\sigma$ is the Stefan-Boltzmann constant of $5.670\times10^{-8}$ $W\bullet m^{-2}\bullet K^{-4}$ and,
b is the Wien's displacement constant of 2.897×10-3 m•K.

In an application such as a cooking oven, requiring a preferred operating wavelength of 2 microns (2×10E-6) for maximum efficiency, the temperature of the element based on Wein's Law should approach 1400 degrees K. or 1127 degrees C. From the Stefan-Boltzmann equation, a small oven with two heating sides would have an operating surface area of approximately 4×0.25 m×0.25 m or 0.25 m2. Thus, W should approach 20,000 Watts for the oven.

In the case of creating a safe high power toaster or oven it is necessary for the system to operate at a low voltage of no more than 24 volts. Thus, using Eq. 2 with 20,000 W, the element will have a resistance of approximately 0.041 ohms, if 100% efficient at the operating temperature. Based on Eq. 1, a decrease in operating temperature to room temperature (from 1400 to 293 k) represents an approximate decrease in the resistivity of the element by about 1.44 times, and therefore an element whose resistance at room temperature is 0.0284 ohms is required.

Now, Considering the Relationship of the Resistance of the Element and the Characterization of the Element as a Blackbody:

The ratio of the resistance of the heater to the black body raditive area of the same heater becomes the critical design constraint for the oven; herein termed the De Luca Element Ratio. The ideal oven for foods operating over a 0.25 square meter area at 2 micron wavelength has a De Luca Element Ratio (at room temperature), of 0.1137 ohms/m2 (0.0284 ohms/0.25 m2). The De Luca Element Ratio is dependent solely on the resistance of the material and the radiative surface area but is independent of the voltage the system is operated. In addition, for wire, the length of the wire will not change the ratio.

Table 1 lists the resistance per meter of several common nichrome wire sizes as well as the De Luca Element Ratio for these elements. It is important to note that all these wires have a De Luca Element Ratio far greater than the 0.1137 required for an oven operated at 1400K, 24V, and over 0.25 m2. Clearly the use of a single wire with a voltage placed from end-to-end in order to achieve the power requirement is not feasible.

In contrast, a household pop-toaster, operated at 120V and 1500 W, over a smaller 0.338 m2 area at 500K would require a De Luca Element Ratio of 35.5. Thus a 1 meter nichrome wire of 0.001 m radius with a 120V placed across it would work appropriately.

TABLE 1

| Wire Radius (m) | Cross Sectional Area (m2) | Resistance Per Meter Length (ohms) | Surface Area of 1 meter length (m2) | Weight Per Meter (g) | De Luca Element Ratio (at room temp) | Time To Reach 1400 K At 20 kw (sec) |
|---|---|---|---|---|---|---|
| 0.01 | 3.14E-04 | 0.0034 | 0.0628 | 2637 | 0.1 | 65.4 |
| 0.0015 | 7.06E-06 | 0.15 | 0.00942 | 59.3 | 16.2 | 1.47 |

(continued)

| Wire Radius (m) | Cross Sectional Area (m2) | Resistance Per Meter Length (ohms) | Surface Area of 1 meter length (m2) | Weight Per Meter (g) | De Luca Element Ratio (at room temp) | Time To Reach 1400 K At 20 kw (sec) |
|---|---|---|---|---|---|---|
| 0.001 | 3.14E-06 | 0.30 | .00628 | 26.3 | 47.7 | 0.654 |
| .0005 | 7.85E-07 | 1.38 | .00314 | 6.6 | 438 | 0.163 |
| 0.000191 | 1.139E-07 | 11.60 | 0.00120 | 0.957 | 9670 | 0.024 |
| 0.000127 | 5.064E-08 | 24.61 | 0.00079 | 0.425 | 30856 | 0.010 |
| 0.000022 | 1.551E-09 | 771.21 | 0.000138 | 0.013 | 5580486 | 0.0003 |

Clearly a lower resistance or a higher surface area is required to achieve a De Luca Element Ratio of close to 0.1137.

One way to achieve the De Luca Ratio of 0.1137 would be to use a large element of 2 cm radius. The problem with this relates to the inherent heat capacity of the element. Note from Table 1 that to raise the temperature to 1400K from room temperature would require 65.4 seconds and thus about 0.36 kWh of energy.

This Calculation is Derived from the Equation Relating Heat Energy to Specific Heat Capacity, where the Unit Quantity is in Terms of Mass is:

$$\Delta Q = mc\Delta T$$

where $\Delta Q$ is the heat energy put into or taken out of the element (where $P \times time = \Delta Q$), m is the mass of the element, c is the specific heat capacity, and $\Delta T$ is the temperature differential where the initial temperature is subtracted from the final temperature.

Thus, the time required to heat the element would be extraordinarily long and not achieve the goal of quick cooking times.

Another way for lowering the resistance is to place multiple resistors in parallel. Kirkoff's law's predict the cumulative result of resistors placed in parallel.

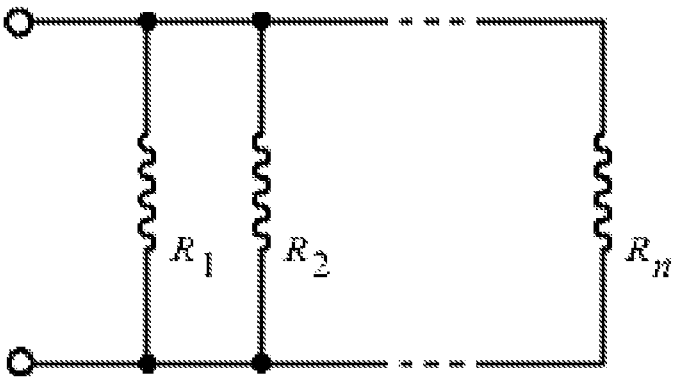


$$\frac{1}{R_{total}} = \frac{1}{R_1} + \frac{1}{R_2} + \dots + \frac{1}{R_n} \qquad \text{Eq. 5}$$

The following Table 2 lists the number of conductors for each of the elements in Table 1, as derived using equation 5, that would need to be placed in parallel in order to achieve a De Luca Element Ratio of 0.1137. Clearly placing and distributing these elements evenly across the surface would be extremely difficult and impossible for manufacture. Also note that the required time to heat the combined mass of the elements to 1400K from room temperature

at 20 kW for elements with a radius of greater than 0.0002 meters is too large with respect to an overall cooking time of several seconds.

TABLE 2

| Wire Radius (m) | De Luca Element Ratio for single element (@ Room Temp) | Number of Parallel Elements Required to Achieve De Luca Ratio of 0.1137 | Total Weight/ Meter (g) | Time To Reach 1400 K At 20 kw (sec) From Room Temp |
|---|---|---|---|---|
| 0.01 | 0.1 | 1 | 2637 | 65.4 |
| 0.0015 | 16.2 | 12 | 711 | 17.6 |
| 0.001 | 47.7 | 22 | 579 | 14.4 |
| .0005 | 438 | 63 | 415 | 10.3 |
| 0.000191 | 9670 | 267 | 255 | 6.3 |
| 0.000127 | 30856 | 493 | 209 | 5.2 |
| 0.000022 | 5580486 | 6838 | 88 | 2.18 |

In summary, the following invention allows for the creation of a high power oven by using a resistive mesh element. The heater element designed so as to allow for the desired wavelength output by modifying both the thickness of the mesh as well as the surface area from which heat radiates. The heater consisting of a single unit mesh that is easily assembled into the oven and having a low mass so as to allow for a very quick heat-up (on the order of less than a few seconds).

Specifically, the wire mesh cloth design calibrated to have the correct De Luca Element Ratio for a fast response (less than 2 sec) oven application operating at 1400 degrees K.

According to exemplary embodiments, a mesh design for operating a quick response time oven consisting of a nichrome wire mesh with strand diameter of 0.3 mm, and spacing between strands of 0.3 mm, and operating voltage of 24V.

In considering the best mesh design, it is important to evaluate the blackbody radiative area as well as the resistance of the element as a function of the following:

1) The number of strands per unit area of the mesh
2) The radius of the mesh strands
3) The mesh strand material
4) The potential for radiation occlusion between strands.

FIG. 1 describes the blackbody area as a function of the number of strands and the strand spacing of the mesh. Interestingly, the surface area is independent of the radius of the wire strand if the spacing is made a function of the radius.

Using equation 5 from above, the resistance of the mesh can be calculated for a specific wire strand radius. FIG. 2 illustrates the electrical resistance of a nichrome mesh element as a function of the radius of the strand and the mesh spacing. Limitation in Equation 5 become apparent as the number of strands becomes very high and the resistance becomes very low; thus atomic effects associated with random movement of electrons in the metal at room temperature form a minimum resistive threshold.

Using nichrome as the strand material in the mesh and operating the system at 20 kW, the ramp up time to achieve an operating temperature of 1400 degrees K. is a function of the strand radius and the mesh spacing (note that a nominal mesh size of two times 125 mm×250 mm is used). FIG. 3 illustrates the region below which a ramp up of less than 2 seconds is achievable (note that wire radius above 0.5 mm are not shown due to the long required ramp up times).

FIG. 4 is a composite graph of FIGS. 1 and 2, indicating the regions applicable for high speed oven cooking with a De Luca Element Ratio close to 0.11 ohms/m2.

FIG. 5 is a photograph of oven 3 with top and bottom wire mesh elements 1 and 2 each 125 mm×230 mm and operated at 24V. Each wire mesh (1 and 2) has 766-125 mm long filaments woven across 416-230 mm long elements, each element 0.3 mm in diameter. A 24 V battery source is placed across the length of the 766 elements at bus bars 4and 5. The wire surface area for a single strand of 0.14 mm diameter wire is 0.000440 m2/m. Thus, a total surface area (for combined top and bottom elements) can be calculated as:

$$\text{Total Blackbody Radiating Area} = 2 \times 0.000440 \times (416\times0.23+766\times0.125) = 0.168\ \text{m2}$$

The resistance across bus bars 4 and 5 as well as 6 and 7 was measured at 0.04+/-0.01 ohms. (Note that bars 4 and6 as well as 5 and 7 are connected by cross bars 8 and 9 respectively.) Thus calculating the De Luca Element Ratio for the elements gives:

$$0.02\ \text{ohms} +/- 0.01\ \text{ohms}/0.168\ \text{m}^2 = 0.119 +/- 0.06\ \text{ohms/m}^2$$

which is within experimental error to the desired vale for the De Luca Element Ratio providing the most optimal cook time. These experimental values also match closely to the expected values shown in FIG. 4.

Panels 10 and 11 are reflectors used to help focus the radiation towards the item placed in area 12.

According to exemplary embodiments, a mesh is a 0.3 mm×0.3 mm mesh (2×R) using 0.14 mm diameter nichrome wire and operates well at 24V.

A oven based on using wire mesh segments wherein the item to be cooked is transported on a conveyor between separate segments of wire mesh allowing for a continuous flow process versus an intermittent conveyance. Each wire mesh segment or heating element can be individually controlled for duration and optionally intensity. This embodiment can provide the advantage of heating or cooking with a high flow rate. Also, the heating profile for each item can be optimally customized. The customization can be achieved without reconfiguring the hardware of the oven.

Each length of a wire mesh segment and intervening gaps between lengths of the wire mesh segments can provide the equivalent effect of an on-and-off pulsed oven. This can permit for a continuous process flow, for example, when cooking a food item.

In exemplary embodiments, a conveyance belt runs at a constant speed and an item to be cooked is placed on the belt. In some cases wire mesh segments are disposed to reflect on both the top and bottom surfaces of the belt. In other cases, the wire mesh segments can be disposed on either the top or the bottom surface of the belt.

As the object or food item to be heated is conveyed forward by the belt, the wire mesh segments can heat the item. A wire mesh segment or heating element may either be already on or may turn on when the item approaches the segment. The item then passes under the wire mesh segment and heats.

In some embodiments, as the item is conveyed or moves past the wire mesh element, the item can be cooled. A duration of the cool-off period is achieved with a gap. In an embodiment, the wire mesh element can comprise a nichrome heating element.

In the absence of an item to be heated, the wire mesh heating element can be turned off, For example, if the normal process using a wire mesh segment desires 4 seconds on time and then 8 seconds off time, for a belt moving at 60" a minute, a 4" long element would be followed by an 8" gap.

In some embodiments, shielding can be provided to reflect the infrared radiation.

FIG. 6 is an isometric view of a radiant oven 100 comprising multiple wire mesh heating elements 102. A gap 104 is disposed between two of the multiple wire mesh heating elements 102. Buses 108 and 110 supply an electrical current to each of the multiple wire mesh heating elements 102. A movable belt 114 disposed over rollers/motors 112 is provided. An item to heated, for example, food can be disposed on belt 114. Some of the multiple wire mesh heating elements 102 can be disposed above the belt 114 in a plane 120. Some of the multiple wire mesh heating elements 102 can be disposed below the belt 114 in a plane 122. Radiant oven 100 can be disposed in an enclosure (not shown). An enclosure is visible in FIG. 7.

FIG. 7 is an isometric view a 4-stack 400 of a radiant oven 202a, 202b, 202c and 202d disposed in an enclosure.

FIG. 8 is an isometric view of a 4-stach 300 of a radiant oven 302a, 302b, 302c and 302d.

FIG. 9 is a table of energies consumed by various mesh wire segments of a high speed stored energy. The mesh wire segments output heat at a tremendous rate. The food below the wire mesh element needs an off-period or rest period where the heat received by the outer surface of the food item can be conducted to the inner surfaces of the food item. One method of providing a rest period for the food to cycle the wire mesh segments when the food item is static, i.e., not moving, under the heating element. However, with a movable belt on which the food item is disposed, the rest period for a food item can be provided by having a gap substituting for the off-cycle of the wire mesh heating element.

In exemplary embodiments, a pizza can be cooked in 60 seconds in a static wire mesh oven using the duration times (in seconds) presented in the table below. These durations can be translated into segment lengths for the wire mesh elements and the intervening gaps in a 60" conveyer belt equipped oven. In the belt equipped oven, the wire mesh heating segments can be deployed in two planes, namely, top and bottom. The table provides exemplary cycle times wire mesh segment lengths in a 60" oven. The belt oven of the present invention can cut pizza cooking times in half as

compared to the prior art belt ovens. In other embodiments, the belt oven of the present invention can cut pizza cooking times in quarter as compared to the prior art belt ovens.

| Top On | Top Off | Bottom on | Bottom off |
|---|---|---|---|
| 3 | 0 | 3 | 0 |
| 3 | 6 | 3 | 0 |
| 4 | 4 | 3 | 0 |
| 4 | 4 | 2 | 0 |
| 4 | 4 | 0 | 0 |
| 4 | 2 | 3 | 0 |
| 4 | 5 | 0 | 0 |
| 2 | 5 | 0 | 0 |

The examples presented herein are intended to illustrate potential and specific implementations. It can be appreciated that the examples are intended primarily for purposes of illustration for those skilled in the art. The diagrams depicted herein are provided by way of example. There can be variations to these diagrams or the operations described herein without departing from the scope of the invention as defined by the following claims. For instance, in certain cases, method steps or operations can be performed in differing order, or operations can be added, deleted or modified.

## Claims

**1.** A radiant oven (100) comprising:

a cooking cavity configured to receive a cooking load;
a circuit configured to provide current supplied by one or more stored energy devices; and
a main heater comprising a multiple of wire mesh heating elements (102) to be driven by the current, the multiple wire mesh heating elements being sized and positioned to heat the cooking load, and a gap (104) between each of the multiple wire mesh heating elements, **characterised in that** the radiant oven further comprises a movable belt (114) configured to support the cooking load as the cooking load is moved through the cooking cavity, wherein the gap between each of the multiple wire mesh heating elements substitutes for an off-cycle of the radiant oven,
and **in that** the radiant oven is configured so that each of the multiple wire mesh heating elements is individually controlled for duration.

**2.** The radiant oven (100) of claim 1, wherein the stored energy devices are batteries.

**3.** The radiant oven (100) of claim 1, wherein the multiple wire mesh heating elements (102) are arranged in parallel in at least one plane (120; 122).

**4.** The radiant oven (100) of claim 1, wherein a ratio of a resistance of at least one of the multiple heating elements (102) to a radiative black body area of the at least one of the multiple heating elements is less than 2 ohms/$m^2$.

**5.** The radiant oven (100) of claim 1, wherein at least one of the multiple heating elements (102) is capable of reaching about 1400° Kelvin from room temperature in less than 10.3 seconds.

**6.** The radiant oven (100) of claim 1, further comprising a charger configured to charge the one or more stored energy devices by drawing power from an external power supply.

**7.** The radiant oven (100) of claim 1, further comprising:

a tray configured to support the cooking load; and
a rotator configured to move the tray in a concentric motion for evenly radiating the cooking load.

**8.** The radiant oven (100) of claim 1, wherein a distance of a top surface of the belt (114) to the multiple wire mesh heating elements (102) is adjustable.

**9.** The radiant oven (100) of claim 1, further comprising multiple relays, each relay configured to cycle a current connection to at least one of the multiple heating elements (102), and a control circuit configured to control each relay of the multiple relays.

**10.** The radiant oven (100) of claim 1, further comprising a temperature sensor in communication with the control circuit.

**11.** The radiant oven (100) of claim 1, further comprising a control circuit configured to control a current to each of the multiple wire mesh heating elements (102) by cycling each of the currents on and off at a duty ratio in response to a user input, or automatically in response to a measured parameter indicting a condition of the cooking load.

**12.** The radiant oven (100) of claim 1, further comprising the :

a first bus (108) comprising a tensioned support attached to a first side of the wire mesh (102); and
a second bus (110) comprising a tensioned support attached to a second side of the wire mesh, wherein the second side is opposite the first side.

**13.** The radiant oven (100) of claim 1, further comprising a control circuit configured to preheat at least one of the multiple wire mesh heating elements (102) using a small current.

**14.** The radiant oven (100) of claim 1, further comprising a voltage control circuit configured to vary the voltage of each of the multiple wire mesh heating elements (102).

## Patentansprüche

**1.** Strahlungsofen (100), umfassend:

einen Garraum, der so konfiguriert ist, dass er eine Gargutmenge aufnimmt;
eine Schaltung, die so konfiguriert ist, dass sie Strom liefert, der von einer oder mehreren Energiespeichervorrichtungen geliefert wird; und
eine Hauptheizung, umfassend eine Vielzahl von Drahtgitter-Heizelementen (102), die durch den Strom zu betreiben sind, wobei die Vielzahl der Drahtgitter-Heizelemente so bemessen und positioniert sind, dass sie die Gargutmenge erhitzen, und einen Spalt (104) zwischen jedem der Vielzahl der Drahtgitter-Heizelemente, **dadurch gekennzeichnet, dass** der Strahlungsofen weiter ein bewegliches Band (114) umfasst, das so konfiguriert ist, dass es die Gargutmenge trägt, wenn die Gargutmenge durch den Garraum bewegt wird, wobei der Spalt zwischen jedem der Vielzahl der Drahtgitter-Heizelemente einen Aus-Zyklus des Strahlungsofens ersetzt,
und dass der Strahlungsofen so konfiguriert ist, dass jedes der Vielzahl der Drahtgitter-Heizelemente für die Dauer einzeln gesteuert wird.

**2.** Strahlungsofen (100) nach Anspruch 1, wobei die Energiespeichervorrichtungen Akkumulatoren sind.

**3.** Strahlungsofen (100) nach Anspruch 1, wobei die Vielzahl der Drahtgitter-Heizelemente (102) in mindestens einer Ebene (120; 122) parallel angeordnet sind.

**4.** Strahlungsofen (100) nach Anspruch 1, wobei ein Verhältnis eines Widerstands von mindestens einem der Vielzahl der Heizelemente (102) zu einer Strahlungs-Schwarzkörperfläche des mindestens einen der Vielzahl der Heizelemente weniger als 2 Ohm/$m^2$ beträgt.

**5.** Strahlungsofen (100) nach Anspruch 1, wobei mindestens eines der Vielzahl der Heizelemente (102) in der Lage ist, etwa 1400° Kelvin von Raumtemperatur in weniger als 10,3 Sekunden zu erreichen.

**6.** Strahlungsofen (100) nach Anspruch 1, weiter umfassend ein Ladegerät, das so konfiguriert ist, dass es die eine oder die mehreren Energiespeichervorrichtungen durch Entnahme von Strom aus einer externen Stromversorgung lädt.

7. Strahlungsofen (100) nach Anspruch 1, weiter umfassend:

   eine Schale, die so konfiguriert ist, dass sie die Gargutmenge trägt; und
   einen Rotor, der so konfiguriert ist, dass er die Schale in einer konzentrischen Bewegung bewegt, um die Gargutmenge gleichmäßig zu bestrahlen.

8. Strahlungsofen (100) nach Anspruch 1, wobei ein Abstand einer oberen Fläche des Bandes (114) zu der Vielzahl der Drahtgitter-Heizelemente (102) einstellbar ist.

9. Strahlungsofen (100) nach Anspruch 1, weiter umfassend eine Vielzahl von Relais, wobei jedes Relais so konfiguriert ist, dass es eine Stromverbindung zu mindestens einem der Vielzahl der Heizelemente (102) schaltet, und eine Steuerschaltung, die so konfiguriert ist, dass sie jedes Relais der Vielzahl der Relais steuert.

10. Strahlungsofen (100) nach Anspruch 1, weiter umfassend einen Temperatursensor in Verbindung mit dem Steuerkreis.

11. Strahlungsofen (100) nach Anspruch 1, weiter umfassend eine Steuerschaltung, die so konfiguriert ist, dass sie einen Strom für jedes der Vielzahl der Drahtgitter-Heizelemente (102) steuert, indem sie jeden der Ströme mit einem Tastverhältnis als Reaktion auf eine Benutzereingabe oder automatisch als Reaktion auf einen gemessenen Parameter, der einen Zustand der Gargutmenge anzeigt, ein- und ausschaltet.

12. Strahlungsofen (100) nach Anspruch 1, weiter umfassend den:

    einen ersten Bus (108), umfassend einen gespannten Träger, der an einer ersten Seite des Drahtgitters (102) befestigt ist; und
    einen zweiten Bus (110), umfassend einen gespannten Träger, der an einer zweiten Seite des Drahtgitters befestigt ist, wobei die zweite Seite der ersten Seite gegenüberliegt.

13. Strahlungsofen (100) nach Anspruch 1, weiter umfassend eine Steuerschaltung, die so konfiguriert ist, dass sie mindestens eines der Vielzahl der Heizelemente (102) unter Verwendung eines geringen Stroms vorheizt.

14. Strahlungsofen (100) nach Anspruch 1, weiter umfassend eine Spannungssteuerschaltung, die so konfiguriert ist, dass sie die Spannung jedes der Vielzahl der Drahtgitter-Heizelemente (102) variiert.

**Revendications**

1. Four à rayonnement (100) comprenant :

   une cavité de cuisson configurée pour recevoir une charge de cuisson ;
   un circuit configuré pour fournir un courant fourni par un ou plusieurs dispositifs de stockage d'énergie ; et
   un élément chauffant principal comprenant un multiple d'éléments chauffants à treillis métallique (102) pour être entraîné par le courant, les multiples éléments chauffants à treillis métallique étant dimensionnés et positionnés pour chauffer la charge de cuisson, et un espace (104) entre chacun des multiples éléments chauffants à treillis métallique, **caractérisé en ce que** le four à rayonnement comprend en outre une courroie mobile (114) configurée pour supporter la charge de cuisson lorsque la charge de cuisson est déplacée à travers la cavité de cuisson, dans lequel l'espace entre chacun des multiples éléments chauffants à treillis métallique remplace le hors-cycle du four à rayonnement,
   et **en ce que** le four à rayonnement est configuré de façon à ce que chacun des multiples éléments chauffants à treillis métallique est contrôlé individuellement pour la durée.

2. Four à rayonnement (100) selon la revendication 1, dans lequel les dispositifs de stockage d'énergie sont des piles.

3. Four à rayonnement (100) selon la revendication 1, dans lequel les multiples éléments à treillis métallique (102) sont disposés parallèlement dans au moins un plan (120 ; 122).

4. Four à rayonnement (100) selon la revendication 1, dans lequel un rapport d'une résistance d'au moins un des multiples éléments à treillis métallique (102) à une surface de corps noir radiative du au moins un des multiples

éléments chauffants est de moins de 2 ohms/$m^2$.

**5.** Four à rayonnement (100) selon la revendication 1, dans lequel au moins un des multiples éléments chauffants (102) est capable d'atteindre environ 1400° Kelvin à partir de la température ambiante en moins de 10,3 secondes.

**6.** Four à rayonnement (100) selon la revendication 1, comprenant en outre un chargeur configuré pour charger les un ou plusieurs dispositifs de stockage d'énergie en tirant de l'énergie à partir d'une source d'alimentation externe.

**7.** Four à rayonnement (100) selon la revendication 1, comprenant en outre :

un plateau configuré pour supporter la charge de cuisson ; et
un dispositif de rotation configuré pour déplacer le plateau dans un mouvement concentrique pour irradier uniformément la charge de cuisson.

**8.** Four à rayonnement (100) selon la revendication 1, dans lequel une distance d'une surface supérieure de la courroie (114) aux multiples éléments chauffants à treillis métallique (102) est réglable.

**9.** Four à rayonnement (100) selon la revendication 1, comprenant en outre de multiples relais, chaque relai configuré pour faire passer la connexion de courant à au moins un des multiples éléments chauffants (102), et un circuit de commande configuré pour commander chaque relai des multiples relais.

**10.** Four à rayonnement (100) selon la revendication 1, comprenant en outre un capteur de température en communication avec le circuit de commande.

**11.** Four à rayonnement (100) selon la revendication 1, comprenant en outre un circuit de commande configuré pour contrôler un courant dans chacun des multiples éléments à treillis métallique (102) en activant et en désactivant chacun des courants dans un rapport cyclique en réponse à une entrée d'utilisateur, ou automatiquement en réponse à un paramètre mesuré indiquant une condition de la charge de cuisson.

**12.** Four à rayonnement (100) selon la revendication 1, comprenant en outre :

un premier bus (108) comprenant un support sous tension attaché à un premier côté du treillis métallique (102) ; et
un second bus (110) comprenant un support sous tension attaché à un second côté du treillis métallique, dans lequel le second côté est opposé au premier côté.

**13.** Four à rayonnement (100) selon la revendication 1, comprenant en outre un circuit de commande configuré pour préchauffer au moins un des multiples éléments chauffants à treillis métallique (102) utilisant un faible courant.

**14.** Four à rayonnement (100) selon la revendication 1, comprenant en outre un circuit de commande de tension configuré pour faire varier la tension de chacun des multiples éléments chauffants à treillis métallique (102).

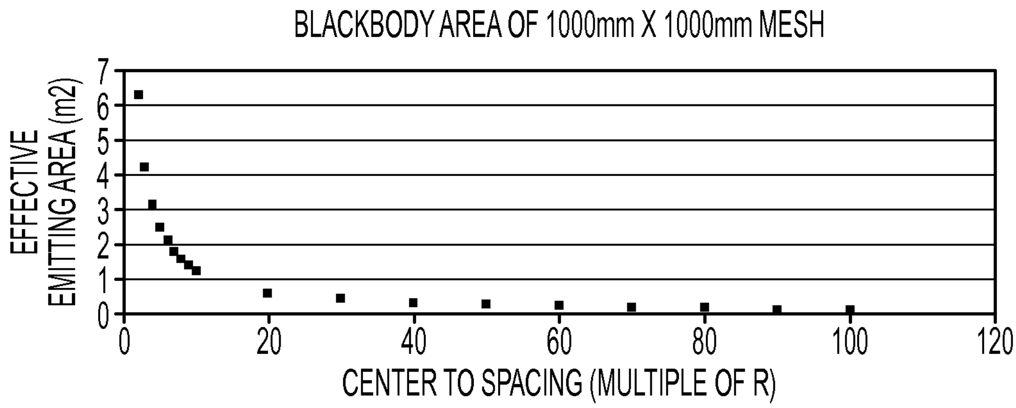
BLACKBODY AREA OF 1000mm X 1000mm MESH
EFFECTIVE EMITTING AREA (m2)
0
1
2
3
4
5
6
7
0
20
40
60
80
100
120
CENTER TO SPACING (MULTIPLE OF R)

FIG. 1

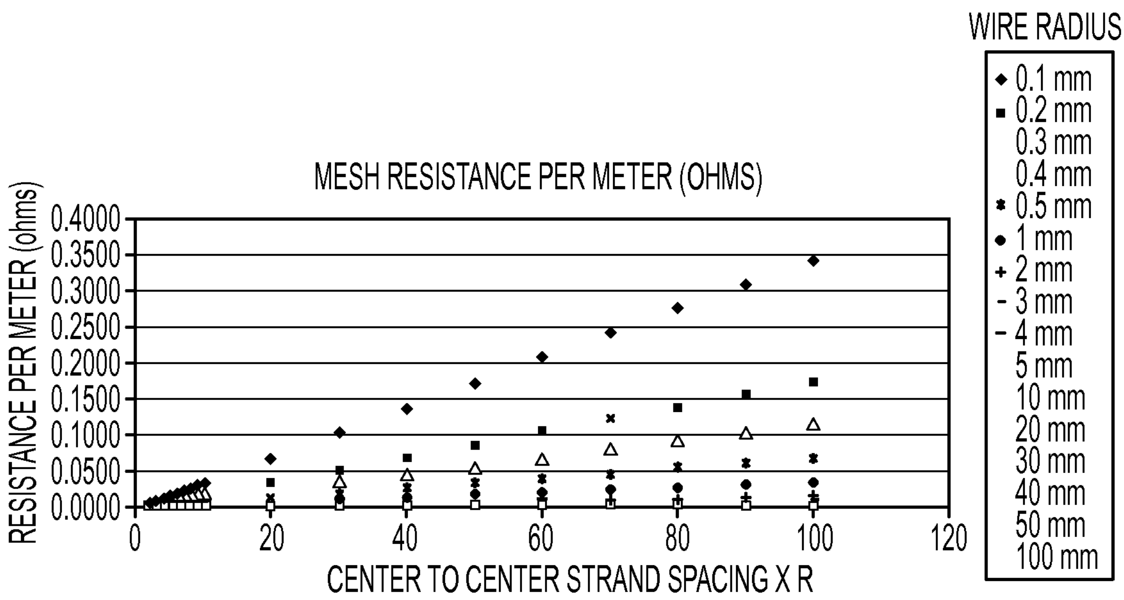
MESH RESISTANCE PER METER (OHMS)
RESISTANCE PER METER (ohms)
0.0000
0.0500
0.1000
0.1500
0.2000
0.2500
0.3000
0.3500
0.4000
0
20
40
60
80
100
120
CENTER TO CENTER STRAND SPACING X R
WIRE RADIUS
0.1 mm
0.2 mm
0.3 mm
0.4 mm
0.5 mm
1 mm
2 mm
3 mm
4 mm
5 mm
10 mm
20 mm
30 mm
40 mm
50 mm
100 mm

FIG. 2

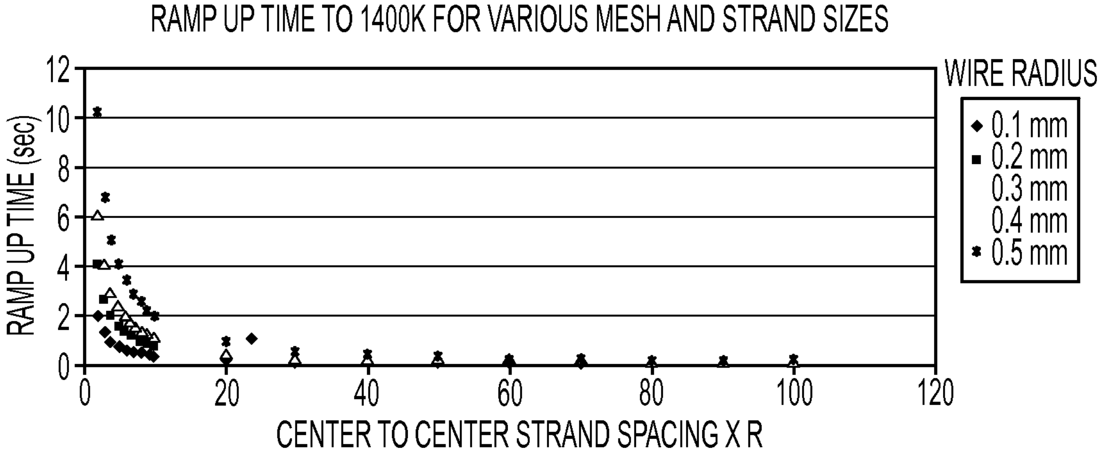
RAMP UP TIME TO 1400K FOR VARIOUS MESH AND STRAND SIZES
RAMP UP TIME (sec)
12
10
8
6
4
2
0
0
20
40
60
80
100
120
CENTER TO CENTER STRAND SPACING X R
WIRE RADIUS
0.1 mm
0.2 mm
0.3 mm
0.4 mm
0.5 mm

FIG. 3

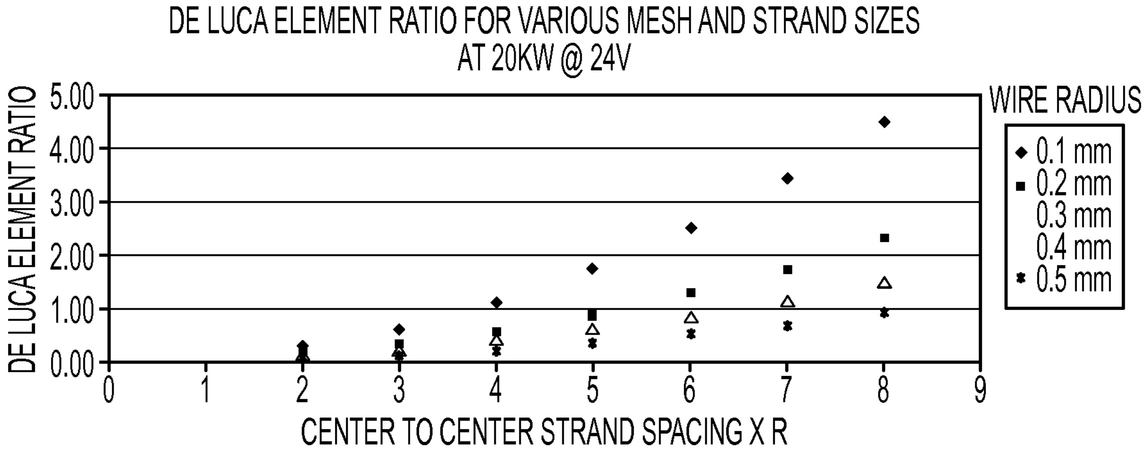
DE LUCA ELEMENT RATIO FOR VARIOUS MESH AND STRAND SIZES
AT 20KW @ 24V
DE LUCA ELEMENT RATIO
5.00
4.00
3.00
2.00
1.00
0.00
0
1
2
3
4
5
6
7
8
9
CENTER TO CENTER STRAND SPACING X R
WIRE RADIUS
0.1 mm
0.2 mm
0.3 mm
0.4 mm
0.5 mm

FIG. 4

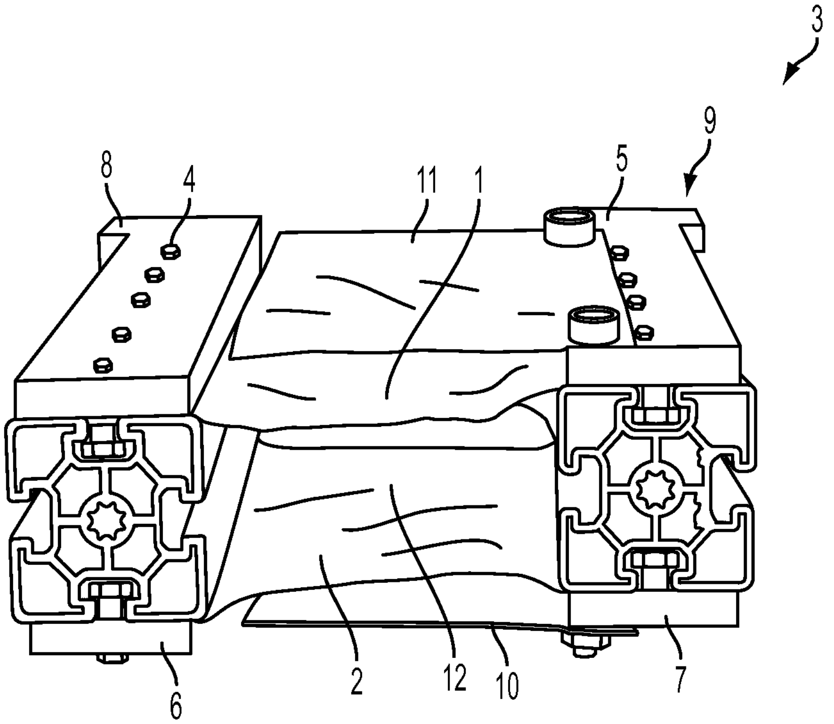


FIG. 5

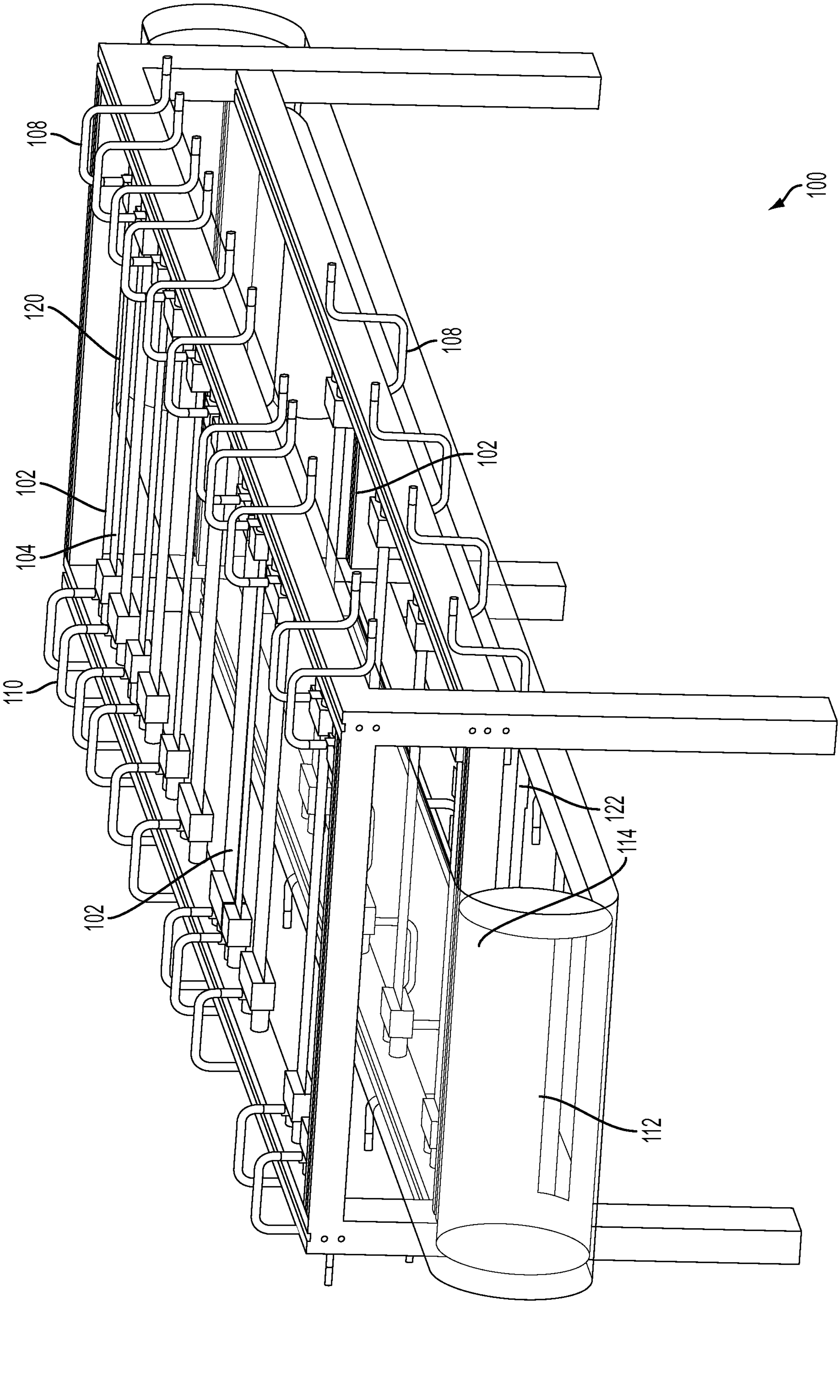


FIG. 6

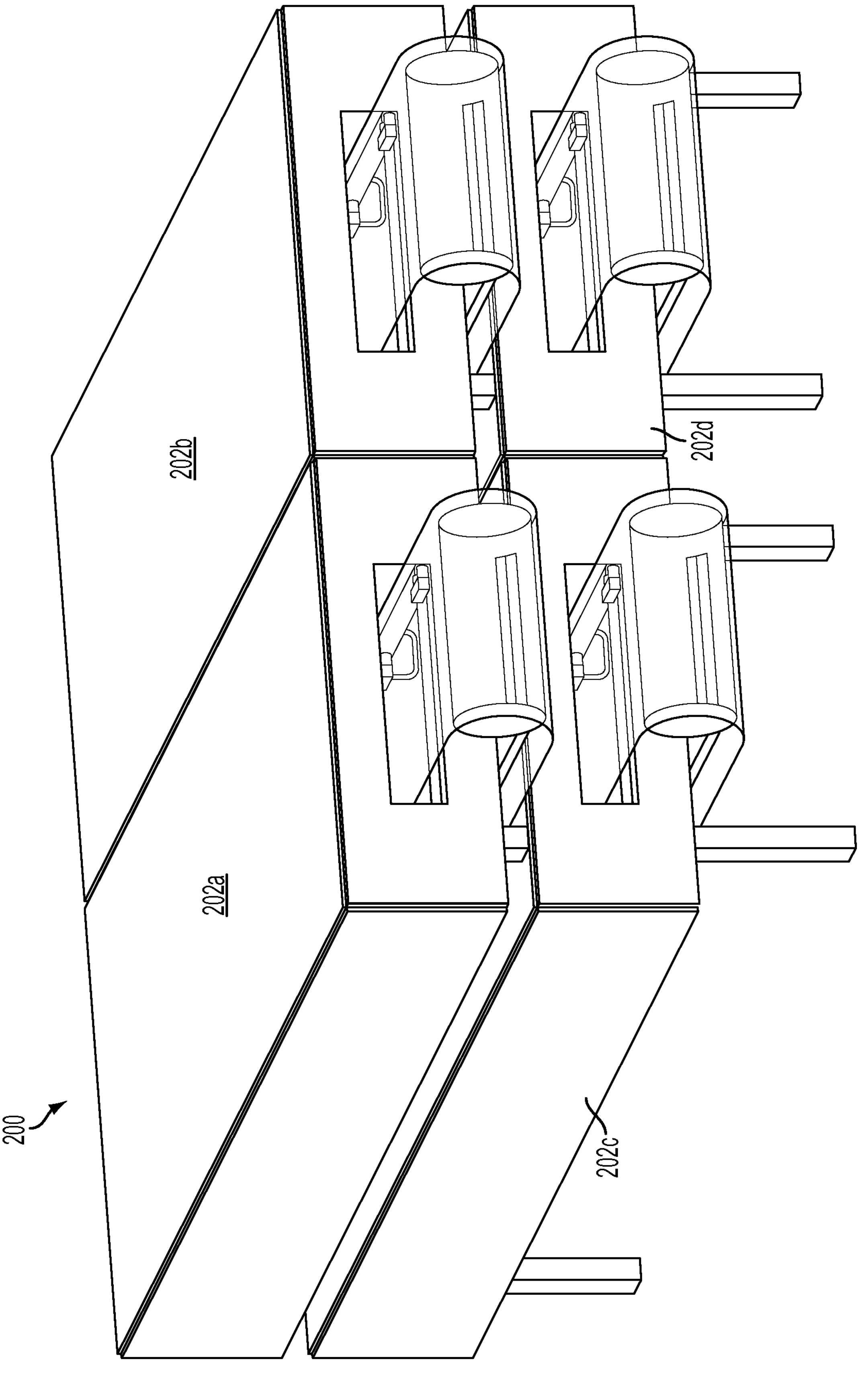


FIG. 7

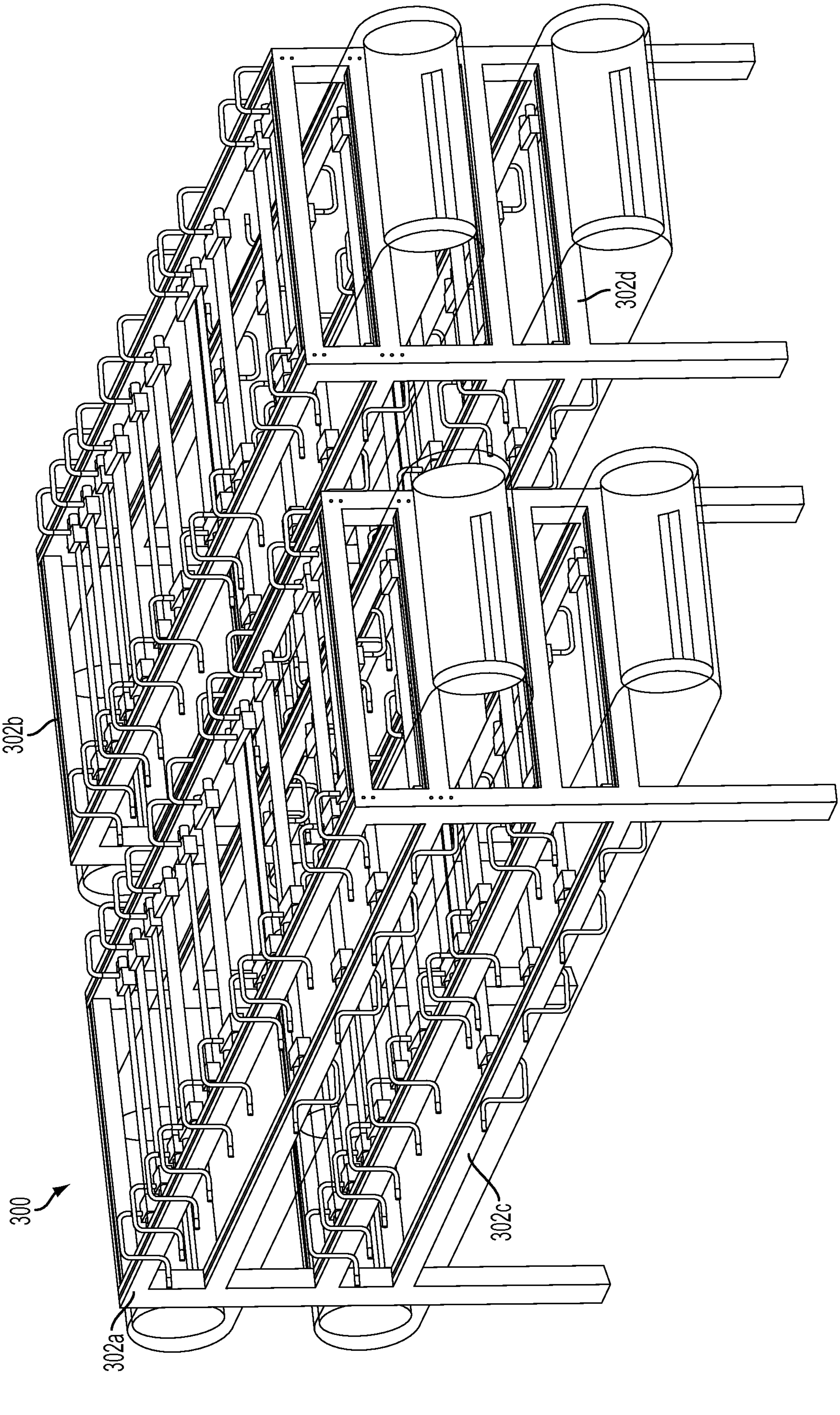


FIG. 8

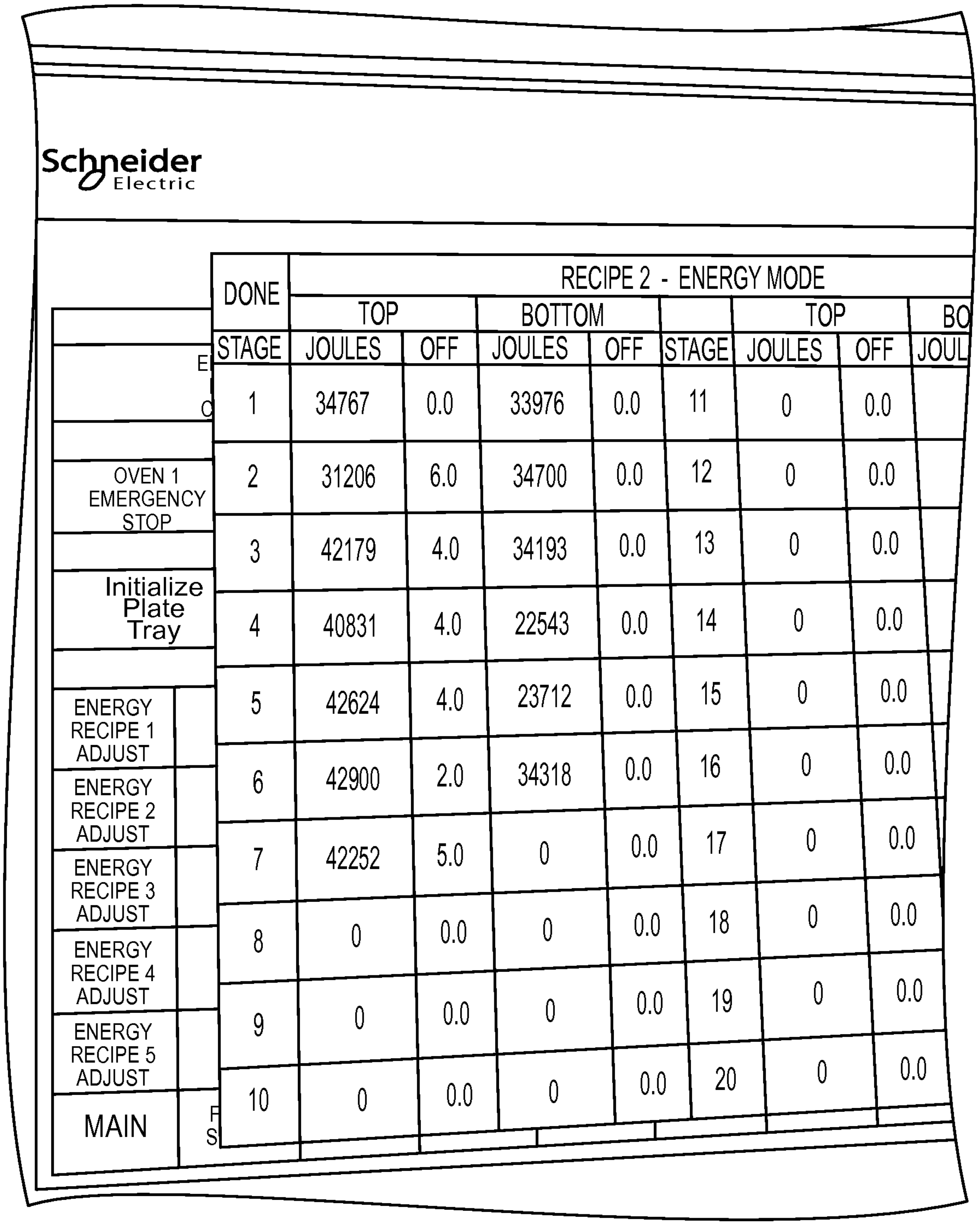
Schneider Electric
OVEN 1 EMERGENCY STOP
Initialize Plate Tray
ENERGY RECIPE 1 ADJUST
ENERGY RECIPE 2 ADJUST
ENERGY RECIPE 3 ADJUST
ENERGY RECIPE 4 ADJUST
ENERGY RECIPE 5 ADJUST
MAIN
DONE
RECIPE 2 - ENERGY MODE
TOP
BOTTOM
TOP
BO
STAGE
JOULES
OFF
JOULES
OFF
STAGE
JOULES
OFF
JOUL
1 34767 0.0 33976 0.0 11 0 0.0
2 31206 6.0 34700 0.0 12 0 0.0
3 42179 4.0 34193 0.0 13 0 0.0
4 40831 4.0 22543 0.0 14 0 0.0
5 42624 4.0 23712 0.0 15 0 0.0
6 42900 2.0 34318 0.0 16 0 0.0
7 42252 5.0 0 0.0 17 0 0.0
8 0 0.0 0 0.0 18 0 0.0
9 0 0.0 0 0.0 19 0 0.0
10 0 0.0 0 0.0 20 0 0.0

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010166397 A
- WO 0040912 A2